# EUROPÄISCHE PATENTSCHRIFT

(11) **EP 1 572 321 B1**
(45) Veröffentlichungstag und Bekanntmachung des Hinweises auf die Patenterteilung: **21.02.2007**
(21) Anmeldenummer: 03750444.6
(22) Anmeldetag: 27.08.2003
(51) Int. Cl.: B01D 47/06

(54) **AEROSOLABSCHEIDER**
AEROSOL SEPARATOR
SEPARATEUR D'AEROSOL

(30) Priorität: 19.12.2002 DE 10259410
(43) Veröffentlichungstag der Anmeldung: 14.09.2005
(73) Patentinhaber: Forschungszentrum Karlsruhe GmbH, 76133 Karlsruhe (DE)
(72) Erfinder: WÄSCHER, Thomas, 69123 Heidelberg (DE); ARHEIDT, Ralf, 76227 Karlsruhe (DE); BAUMANN, Werner, 76228 Karlsruhe (DE); BOLOGA, Andrei, 76297 Stutensee (DE); PAUR, Hanns-Rudolf, 76139 Karlsruhe (DE)
(86) Internationale Anmeldenummer: PCT/EP2003/009455
(87) Internationale Veröffentlichungsnummer: WO 2004/056448

(56) Entgegenhaltungen:
- CA-A- 885 031
- DE-C- 10 132 582
- GB-A- 334 660

## Beschreibung

Die Erfindung betrifft einen Aerosolabscheider, mit dem Staub- und Tropfenaerosole im allgemeinen und speziell in Gasreinigungsanlagen abgeschieden werden.

Solche Anlagen treffen auf einen sehr breiten Anwendungsbereich, wo warme und feuchte Gase aus stationären und mobilen Quellen, wie motorisch betriebene Fahrzeuge und Schiffe, Motorenanlagen, Blockheizkraftwerke, Reststoffverbrennungsanlagen, fossile betriebene Kraftwerksanlagen, Müll- und Sondermüllverbrennungsanlagen, Anlagen der chem. Industrie, auftreten.

Bekannt ist aus der DE 10132 582 eine Anlage mit elektrostatischer Einrichtung zur Reinigung von mit flüssigen oder festen Partikeln belasteten Gasen. Die Anlage besteht aus drei Abschnitten:
dem Ionisierungs- und Hauptreinigungsabschnitt für das wassergesättigte Rohgas aus einer der Ionisierungseinrichtung für die Verunreinigungspartikel folgenden Raumladungszone,
dem Nebenreinigungsabschnitt aus einer Zone geerdeter Hohlelektroden und
der abschließenden Feinreinigung in einer Filtereinrichtung nach der das Reingas in die davor liegende Umgebung abgeleitet wird.
Die Ionisierung der Partikel folgt in einer Koronaentladung. Anfallendes, mit abgeschiedenen Partikeln aus den drei Zonen wird aufgefangen und gereinigt und dem Gasreinigungsprozess wieder zugeführt. Das beim Durchströmen der Röhrenzwischenräume anfallende erwärmte Kühlmittel kann zur Erwärmung des Sperrgases für die Isolation der Halterungen und damit der mindestens einen Hochspannungsdurchführung verwendet werden.

Der Erfindung liegt die Aufgabe zugrunde, flüssige und feste Grob-und Feinstnebel ohne den hierzu üblicherweise erforderlichen hohen Differenzdruck mit einem Abscheidegrad von > 90% abzuscheiden und kontinuierlich auszuschleusen.

Die Aufgabe wird durch einen Aerosolabscheider gemäß Anspruch 1 gelöst. Er weist die folgenden Merkmale auf:
Der Aerosolabscheider befindet sich in einem Stück runden oder rechteckigen Kanal aus Blech oder prozessatmosphärengeeignetem Material. Wichtig ist, dass er mit seiner Kanalachse senkrecht oder zumindest in der weiter unten begründeten Weise steil steht und das Rohgas im Betrieb von unten einströmt. Er kann in einen Kanal eingegliedert sein oder in einer Decke sitzen, die einen Rohgasraum von einer sauberen Umgebung trennt.

In Strömungsrichtung gesehen beginnt der Aerosolabscheider, baulich gesehen, mit einer den Kanalquerschnitt überdeckenden Eindüsungszone oder mehreren solchen, axial hintereinander gestapelten Eindüsungszonen mit jeweils einer Düse in der Kanalwand
oder mit mehreren um den Umfang gleichverteilten in einer Querschnittsebene sitzenden Düsen. Die meist warmen und feuchten Abgase, z. B. nach stationären oder mobilen Verbrennungsmotorenanlagen sowie nach Verbrennungsanlagen für fossile Brennstoffe und/oder für Abfälle aus z.B. nach einer SO₂-Absorptions-Waschkolonne und einem Grobtropfenabscheider werden im Betrieb durch Eindüsung von kälterer Flüssigkeit schockartig und homogen in Übersättigung gebracht. In der oder den Eindüsungszonen wird im Betrieb das durchströmende Abgas mit einem Tropfennebel aus einer für den Prozess geeigneten, leicht verdampfenden Flüssigkeit beaufschlagt und in den übersättigten Nassbereich überführt. Damit dies erwartet wirksam geschieht, ist die jeweilige Sprühachse einer Düse senkrecht auf die Achse bis schräg dazu entgegen dem Abgasstrom gerichtet. Diese Einstellung beruht auf den jeweils eingesetzten Sprühdüsen und dem gefahrenen Eignungsexperiment.

Baulich schließt sich stromabwärts das Rohrbündel an. Im Betrieb durchströmt also anschließend das übersättigte Roh-/Abgas weiter steil bis senkrecht nach oben diesen folgenden Kanalabschnitt, der aus vielen Einzelrohren besteht. Dieses Rohrbündel ist ein Bündel aus dichtgepackten, gleichartigen, geraden Rohren aus prozessgeeignetem/-inertem Material oder gründet ein zur Kanalachse konzentrisches Ringbündel mit größtmöglicher lichter Querschnittsfläche für die Packung vieler Rohre um die Kanalachse. Letzteres könnte aus baustatischen Gründen bei großen Rohrpaketen eine mechanische Lösung für den Einbau dieser Zone sein. Das Rohrpaket oder das Rohrbündel füllt den ganzen lichten Querschnitt des Kanals aus. Es steht auf einer in Strömungsrichtung zur Kanalachse hin konkav gewölbten, an der Kanalwand verankerten, quer zur Strömungsrichtung angeordneten, gasdurchlässigen Stellfläche, und zwar stehen alle Rohre des Pakets auf dieser auf. Dabei steht die Kanalachse senkrecht oder zumindest so steil, dass die Stellfläche, von der Kanalachse ausgehend, stets ein Gefälle zur Kanalwand hin aufweist. Die Stellfläche kann insbesondere als perforiertes Ausgangsblech oder als Gitter ausgebildet sein. Die Einzelrohre stehen im einfachsten Fall regellos aber dicht an dicht im Bündel/Paket. Sie werden innen und außen, im Roh-/Abgasstrom stehend, von demselben durchströmt. Die Länge der Rohre des Pakets ist mindestens fünfmal so groß wie der Rohrdurchmesser D.

Das im Rohrpaket abgeschiedene Tropfenaerosol des gesättigten Roh/Abgases läuft, durch die Schwerkraft getrieben, im Gegenstrom mit dem zu reinigenden durchströmendem Gas zum unteren Ende des Rohrpaketes und würde dann von dort in großen Tropfen in die Kolonne zurücktropfen. Das wird aber durch die perforierte Stellfläche verhindert, deren Perforationen eine Form mit lichtem Querschnitt derart haben, dass keines der aufstehenden Rohre durchfallen kann. Das aus den Rohren laufende Tropfenaerosol fließt, an der Stellfläche haftend, zur Rinne hin ab. Diese sitzt zwischen der Eindüsungszone und dem Linienansatz der gasdurchlässigen Stellfläche an der Innenwand nahe oder bei letzterem. Sie läuft an der Innenwand des Kanals vollständig um und fängt im Betrieb das an der gasdurchlässigen Stellfläche abfließenden Kondensat auf. Die Rinne hat mindestens eine Abflussöffnung durch die Kanalwand hindurch, durch die das aufgefangene Kondensat abfließt.

Nach Anspruch 12 werden zum Bau des Aerosolabscheiders und des Bildung des Rohrpakets Rohre verwendet, die strömungsphysikalisch/technisch jeweils so ausgelegt/dimensioniert sind, dass die Reynoldszahl Re = w * D/ν < 2000 bleibt. Dabei steht w für die Gasgeschwindigkeit in m/s, ν für die Gasviskosität im Betriebszustand in m²/s und D für den Durchmesser eines Einzelrohres.

Die Unteransprüche 2 bis 11 beschreiben Ausgestaltungen, die je nach Rohgas den Reinigungseffekt noch unterstützen.

So können die gestreckten Rohre des Rohrbündels glatt oder gewellt wie ein Wellschlauch oder schraubenförmig gewunden sein (Anspruch 2 und 3). Sie sind aus dielektrischem oder metallischem Material. Im ersten Fall kann das Glas, Kunststoff, Keramik, im zweiten Stahl-, insbesondere Edelstahlrohre oder Kupferrohre oder für den Prozess o-berflächenveredelte Rohre sein, insofern als die Oberfläche inert gegen die Prozessatmosphäre ist. Die Oberflächevergütung kann auch bei den dielektrischen Rohren aufgebracht sein (Anspruch 4). Im allgemeinen können die Rohre, in gewellter oder glatter Form, nach DIN-Norm gefertigte Handelsware sein. Im besonderen wäre nur eine problematische/aggressive Prozessatmosphäre zu beachten, was die Beständigkeit betrifft. Die Rohrform betrifft das aber nicht.

Die von der Anströmrichtung her gesehen konkave Form der Stellfläche fällt, vom Zentrum her gesehen, so stark zur Kanalinnenwand hin ab, dass das unten am Rohrbündel austretende Aerosol an der Stellwand haftend zur Kanalinnenwand hin abgleitet. Von der Herstellung her gesehen, ist die geometrische Gestalt der Stellfläche im einfachen Fall eine Hohlpyramide oder ein Hohlkegel, da solche Flächen leicht aus ebenem Ausgangsmaterial hergestellt werden können. Je spitzer der Öffnungswinkel ist, um so eher bleibt das abgeschiedene Aerosol gleitend an der Stellfläche haften. Einschränkend verlangt aber die Forderung einer kompakten Bauweise des Abscheiders eine geringe Höhe des Rohrpakets insgesamt. Auf jeden Fall ist der Öffnungswinkel der Stellfläche kleiner als 180°. Experimentelle Erfahrung mit verschiedenen Aerosolen und Bauweisen der Stellfläche zeigen, dass der Öffnungswinkel α zwischen 70 und 100° liegen soll, um den Abscheider, insgesamt gesehen, leistungsfähig und wirtschaftlich zu bauen (Anspruch 5). (Nur wenn es zulässig ist, dass das abgeschiedene Aerosol durchtropfen kann, kann das Rohrbündel mit α > 180° gebaut werden.)

Die Stellfläche ist aus perforiertem Ausgangsblech gebaut. Die Perforationen können beliebigen einfachen lichten Querschnitt haben, wie quadratisch oder kreisförmig, polygonal oder oval. Sind die Perforationen länglich, ist es vorteilhaft, wenn die Längsachse auf einer lokalen Mantellinie der Stellfläche oder in Richtung des Gradienten verläuft. Auf jeden Fall ist die Form der lichten Weite der Perforationen so, dass kein Rohr aus dem aufstehenden Bündel durch die Stellfläche hindurch fallen kann (Anspruch 6).
Statt eines perforierten Blechs ist auch Gitter mit regelmäßigen Maschen geeignet (Anspruch 7) oder ein Gitter mit entlang jeweils einer Mantellinie verlaufenden Drähten, die durch festangebrachte, umlaufende Drähte in Form gehalten werden. Die umlaufenden Drähte befinden sich vorteilhaft für das hindernisfreie Aerosolabfließen auf der stromabgewandten Seite. Auch hier besteht die Forderung an die Maschenweite: es darf kein Rohr aus dem Paket durchfallen (Anspruch 8). Im Falle des Gitters als Stellfläche sitzen die Maschen stets so, dass die Berandung der Masche mit Teilen nicht waagrecht sitzt.

Zur Spülung des Rohrpakets oder zum unterstützenden Befeuchten im Rohrpaket ist oberhalb in Gastromrichtung desselben eine weitere Sprühebene eingebaut, die aus einem von der Kanalwand senkrecht ausgehenden Rohr besteht, das in eine flussdeltaförmige Rohrverzweigung aus mindestens einem Zweig oder in einen zur Achse konzentrischen Rohrring mündet. An den Endrohrstücken oder dem Ring sind Sprühdüsen zur gleichmäßigen Besprühung der in Strömungsrichtung weisenden konvexen Stirn des Rohrpakets (Anspruch 9). Die obere und untere Besprühung kann kontinuierlich oder nach Bedarf erfolgen und sie kann jeweils kontinuierlich oder intervallweise, gekoppelt oder ungekoppelt erfolgen.

Das in der an der Kanalinnenwand angebauten Rinne aufgefangene Aerosol muss rasch und zuverlässig abgeleitet werden. Je nach anfallender Menge hat die Rinne einen oder mehrere Abflüsse durch die Kanalwand, und diese befinden sich immer an der tiefsten Stelle ihres jeweiligen Rinneneinzugsbereichs (Anspruch 10).

Ist der Kanalquerschnitt groß, so das Rohrpaket als Ganzes nicht so ohne weiteres transportiert werden kann, ist es für die Montage und Wartung zweckmäßig, das Rohrpaket aus Sektoren oder Segmenten 11 zu erstellen, d.h. es wird ursprünglich derartig zerlegt geliefert und zusammengebaut, bzw. bei der Wartung entsprechend demontiert und wieder zusammengebaut (Anspruch 11). Bei dieser Bauweise ist eventuell das ringförmige Rohrpaket mit zentraler, auf der Kanalachse liegender Stütze eine zweckmäßige Montagelösung.

Der Aerosolabscheider hat keine Ionisatorstufe, das macht ihn baulich erheblich einfacher durch Wegfall dieser und des Hochspannungsnetzteils und der Sperrgasversorgung. Es werden keine elektrischen Teile mehr benötigt. Statt dessen wird eine Übersättigungsstufe, bestehend aus einer oder mehreren Einstoff-Vollkegeldüsen, die mit kalter Flüssigkeit gespeist werden, installiert. Für die Abscheidung der Flüssigkeitsnebel wird die dem Nebel entsprechende Flüssigkeit voreingedüst, wobei bei organischen Flüssigkeiten auch ähnliche Flüssigkeitsgemische verwendbar sind oder nur Verdünnungs- oder Lösemittel. Die Flüssigkeitseindüsung besteht der Einfachheit halber je nach Größe des Kanals aus einer oder mehreren Einstoff-Vollkegeldüsen und wird so betrieben, dass das Rohgas vor dem Abscheider vollständig in Übersättigung geht. Andere Düsenarten kommen auch in Betracht, sofern mit ihnen das durchströmende Rohgas gleichermaßen übersättigt werden kann.

Der Aerosolabscheider hat einen einfachen apparativen Aufbau, der sich in seinen Herstellungskosten niederschlägt. Für den Betrieb bedeutet das einen reduzierten Energieverbrauch durch Wegfall der Ionisatorstufe. Weitere Vorteile sind der geringe Druckverlust, die gute Abreinigung und die hohe Abscheideleistung. Die Beschreibung des Aerosolabscheiders und sein Betriebsverfahren gilt für die Abscheidung niedrigviskoser oder höherviskoser Flüssigkeitsnebel als Wasser sowie für Flüssigkeitsnebel mit niedrigerem oder höherem Dampfdruck als Wasser, beispielsweise Alkoholnebel oder Ölnebel.

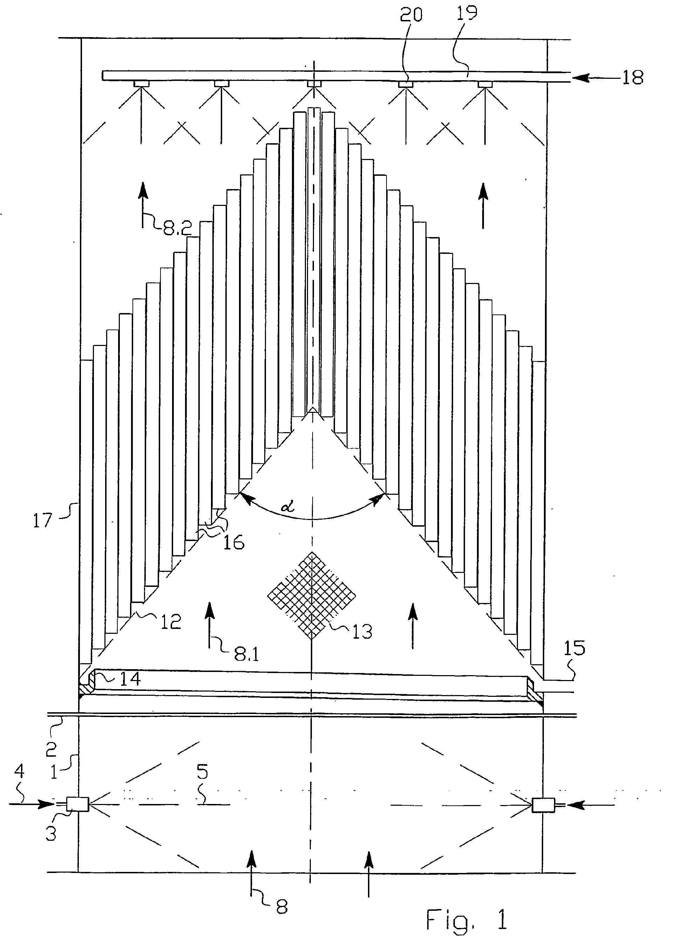

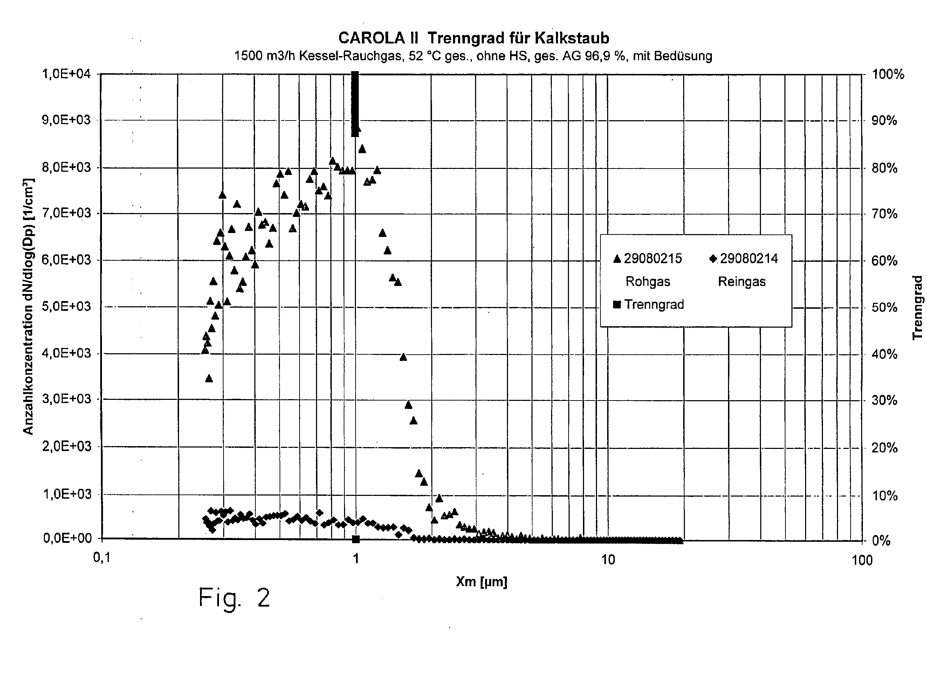

Die Erfindung wird im folgenden anhand der Zeichnung zu einem Ausführungsbeispiel näher beschrieben. Figur 1 zeigt im Schnitt durch die Längsachse den Aufbau eines Aerosolabscheiders mit rundem Kanalquerschnitt und Figur 2 das Schaubild über die Leistungsfähigkeit des Trennens von Kalkstaub beispielsweise.

Bei einer bestehenden Anlage wurde der Effekt, dass im Betrieb der Kaltwasser-Voreindüsung auch ohne Hochspannungseinspeisung ein Massen-Aerosol-Gesamtabscheidegrad von mind. 95% erreichbar ist, erstmalig gemessen.

Die bereits gelieferte und in Erprobung stehende Einheit ist praktisch ein Prototyp, da durch Abschalten der Hochspannung die Ionisatorstufe außer Betrieb gesetzt wird und somit nur der Rohpaketabscheider alleine betrieben wird.

Die Wasser-Voreindüsung wurde installiert, weil beobachtet wurde, dass das Abgas nach der Waschkolonne, obwohl mit dem Waschwasser praktisch im thermischen Gleichgewicht, immer noch trocken die Ionisatorstufe der Anlage erreicht. Die Anlage ist aber ein Nass-Elektro-Filtersystem, das so konstruiert ist, dass das abgeschiedene Tropfenaerosol frei als Kondensat ablaufen kann. Die Wasser-Voreindüsung zeigte den sofortigen Effekt, dass der Abscheidegrad, der trocken/halbnass bei etwa 90 % lag, auf > 95% ohne Hochspannung anstieg.

Beschreibung der Figur 1 am Beispiel mit wässerigem Nebel:
Das von Aerosol zu befreiendes Gas 8 strömt von unten nach oben in den senkrechten Kanalabschnitt 1. Hier wird das Gas mit dem Tropfennebel 5 aus der leicht verdampfbaren Flüssigkeit 4, hier Wasser, beaufschlagt und in den übersättigten Nassbereich überführt. Die Flüssigkeit 4 wird mit Düsen 3, die in der Kanalwand sitzen und nach innen sprühen, vernebelt. Für die ausreichende Vermischung des Nebels mit dem Gas ist es vorteilhaft, die Sprühebene waagerecht, wie gezeichnet, oder mehr oder weniger stark schräg nach unten zu halten.

Ist das vom Aerosol zu befreiende Gas bereits angewärmt und feucht nahe der Sättigung, reicht für die Übersättigung des Gases der in der Höhe kurze Kanalabschnitt 1 in der Größenordnung der Kanalbreite oder des Kanaldurchmessers aus. Die einnebelnde Flüssigkeit hat vorteilhafterweise eine tiefere Temperatur als das Gas.

Ist das vom Aerosol zu befreiende Gas noch weiter von der Sättigungsgrenze entfernt, so ist der zur Übersättigung erforderliche Kanalabschnitt 1 in der Höhe länger, so dass die Kontaktzeit des Nebels aufgrund der längeren Verweilzeit ebenfalls länger ist. Soweit erforderlich, sind mehrere übereinander liegende Sprühebenen installiert. Falls das vom Aerosol zu befreiende Gas immer noch praktisch trocken ist, kann es zum Erreichen der Übersättigung auch erforderlich sein, der oder den Düsenebene/n eine Dampfeinspeisung vorzuschalten.

Das wasserübersättigte, nasse und noch aerosolbeladene Gas strömt anschließend weiter nach oben in den Kanalabschnitt 17, wo es auf die pyramiden- oder kegelförmige, in Strömungsrichtung mittig ausgebuchtete (konkave), gasdurchlässige Stellfläche 12, 13 in Form des Gitters 12 trifft. Die Vorzugsrichtung der Gitterstäbe des Gitters 12 ist schräg in einem Winkel von etwa 45 Grad zur waagerechten, so die Maschen immer schräg stehen. Der Kegel oder Pyramidenwinkel α ist größer 70°, optimalerweise liegt er in dieser Anlage vorzugsweise zwischen 80 und 100°. So besteht einerseits eine gute Fließhaftung des abgeschiedenen Aerosols am Gitter und andrerseits bleibt die Bauhöhe des Rohrpakets begrenzt.

Das übersättigte Abgas 8 strömt senkrecht von unten nach oben durch das Gitter 12, auf dem dicht an dicht die vielen gerade Einzelrohre 16 stehen. Der Durchmesser der Einzelrohre ist so bemessen, dass die Reynoldszahl Re vorzugsweise kleiner 1600 bleibt. Die Länge der Einzelrohre ist mindestens 5 x D, vorzugsweise 10 bis 30 x D.

Das in den Einzelrohren innen und außen abgeschiedene Tropfenaerosol läuft mit Schwerkraft im Gegenstrom zum Gas zum unteren Ende der Rohre und wird durch das gasdurchlässige, zur Kanalwand hin abfallende Gitter im Schwerkraftfluss abgeleitet. An der inneren Kanalwand ist umlaufend die Rinne 14 aus einem beispielsweise rechtwinkeligen Profilmaterial angebracht, auf der das Gitter 12 steht. Die Rinne 14 ist mit leichtem Gefälle gegen die Horizontale zum Abfluss 15 hin geneigt, so dass das vom Gitter 12 ablaufende Kondensat und Tropfenaerosol an der tiefsten Stelle der Rinne durch den dort befindliche Abfluss 15 ausgeleitet wird.

Das vom Aerosol befreite Gas 8.2 tritt oben aus den Rohren und zwischen den Einzelrohren aus und verlässt den Kanalabschnitt 17 direkt oder über weitere Apparate, wie Wärmetauscher, Gebläse, und dergleichen, in die Umgebung.

Falls zeitweise trockene Gaszustände auftreten und/oder das Tropfenaerosol nicht von selbst abläuft und in den Rohren akkumuliert, ist oberhalb des Rohrpakets die weitere Sprühebene 19, 20 an dem waagerechten Sammelrohr 19 installiert. Die mit den Düsen 20 versprühte Flüssigkeit 18 kann kurzzeitig oder ständig gleichmäßig auf die in Stromrichtung 8.2 weisende Stirn des Rohrpakets 16 gerichtet werden und die Rohre von den Aerosolakkumulationen befreien. Auch dieses Waschwasser läuft auf das Gitter 12 und wird zur Rinne 14 geleitet und von dort über den Abfluss 15 ausgeleitet.

Hier wird der quadratische Kanalquerschnitt von 740 x 740 mm von unten nach oben von einem fast wassergesättigten, aber noch trockenen Rauchgas in einer Menge von 1500 Bm³/h bei einer Temperatur von etwa 52°C durchströmt. Unterhalb davon befindet sich der runde Anschlusskanal, der seitlich eine Vollkegel-Einstoffdüse enthält. Diese Düse ist an die VE-Wasserleitung angeschlossen und versprüht 60 1/h Wasser bei 20°C in das Gas 8. Das Gas 8, das in den quadratischen Kanalabschnitt eintritt, ist übersättigt und nass. In einer Höhe von 250 mm über dem Eintritt ist die Ablauf-rinne 14 mit quadratischem Querschnitt mit einem Gefälle von 2,5° an der Kanalinnenwand 17 installiert. Auf der Ablaufrinne 14 steht das pyramidenförmige Gitter 12 mit dem Öffnungswinkel von α = 100° und der Gitterteilung von 10 mm. Auf dem Gitter stehen die etwa 1500 Einzelrohre mit einem Innendurchmesser von 16 und einem Außendurchmesser von 20 mm. Es sind hier aufgrund der geringen thermischen Belastung aus der elektrischen Installationstechnik bekannte Leitungs- bzw. -Kabelschutzrohre aus PE nach VDE 0605, DIN EN 50086 in Form von Wellrohren mit einem Wellenabstand von etwa 3,5 mm. Die Länge der Rohre ist 500 mm. Glatte PE-Rohre oder glatte Stahlpanzerrohre aus der elektrischen Installationstechnik sind durchaus denkbar, sind aber am Prozessfall zu reflektieren, ob sie der Prozessatmosphäre und der Spülflüssigkeit auf lange Sicht standhalten.

Das Gas wurde mit Kalkstaub beladen. Die optische Staubmessung ergab einen Rohgaswert von 28,4 mg/Bm³ im Partikelgrößenbereich zwischen 0,3 und 20 µm. Das Reingas nach Verlassen des Abscheiders wurde mit demselben optischen Messgerät gemessen und ergab eine Reingaswert von 0,9 mg/m³ im selben Partikelgrößenbereich. Die Trenngradkurve zeigt Figur 2. Bei den im Schaubild angegebenen Daten ergab sich ein mittlerer Massen-Abscheidegrad von 96,8%. Die dreieckigen Punkte zeigen die Rohgassituation; die rautenförmigen die des Reingases; der Trenngrad ist durch die quadratischen Punkte dargestellt.

Im beschriebenen Ausführungsbeispiel ist die Befeuchterflüssigkeit Wasser. Lösungsmittel, wie Benzine, niedrige Alkohole dünnflüssige Öle Farblösungsmittel sind bei der entsprechenden Rohgasverunreinigung je nach dem zu verwenden, falls Gefahrenaspekte, wie die der Entzündung oder Vergiftung, mit vertretbarem finanziellen Aufwand neutralisiert und damit beherrscht werden.

## Patentansprüche

1. Aerosolabscheider zum Abscheiden von Staub- und Tropfenaerosol,
- bestehend aus:
einem mit seiner Kanalachse senkrecht oder steil stehenden Kanalabschnitt, in dem der Aerosolabscheider untergebracht ist, in den von unten Abgas einströmbar ist,
- einer den Kanalquerschnitt überdeckenden Eindüsungszone oder mehreren solchen, axial hintereinander gestapelten Eindüsungszonen mit jeweils einer Düse in der Kanalwand oder jeweils mit mehreren um den Umfang gleichverteilten in einer Querschnittsebene sitzenden Düsen,
in der oder denen das durchströmende Roh- oder Abgas mit einem Tropfennebel aus einer leicht verdampfenden Flüssigkeit beaufschlagbar ist und in den übersättigten Nassbereich überführbar ist wird,
wobei die jeweilige Sprühachse einer Düse senkrecht auf die Achse bis schräg dazu entgegen dem Abgasstrom gerichtet ist,
- einem in Strömungsrichtung sich anschließenden, über den Kanalquerschnitt reichenden Bündel aus dichtgepackten und gleichartigen, geraden Rohren aus prozessgeeignetem/-inertem Material, die als Rohrpaket alle auf einer quer zur Strömungsrichtung angeordneten gasdurchlässigen Stellfläche, die insbesondere als perforiertes Ausgangsblech ausgebildet sein kann, die von der Kanalachse ausgehend stets ein Gefälle zur Kanalwand hin aufweist, um im Betrieb sich im Rohrbündel abscheidendes Kondensat abzuleiten, und an der Kanalwand verankert ist, stehen, die Länge eines Rohres mindestens fünfmal den Rohrdurchmesser D aufweist,
- einer an der Innenwand des Kanals zwischen der letzten Eindüsungszone und nahe der Fußlinie der gasdurchlässigen Stellfläche vollständig umlaufenden Rinne zum Auffangen des im Betrieb an der gasdurchlässigen Stellfläche haftend abfließenden Kon densats mit mindestens einer Abflussöffnung durch die Kanalwand hindurch.

2. Aerosolabscheider nach Anspruch 1, **dadurch gekennzeichnet, dass** die Rohre des Rohrpakets glatt sind.

3. Aerosolabscheider nach Anspruch 1, **dadurch gekennzeichnet, dass** die Rohre des Rohrpakets gewellt oder schraubenförmig gewunden sind.

4. Aerosolabscheider nach den Ansprüchen 2 und 3, **dadurch gekennzeichnet, dass** die Rohre aus dielektrischem oder metallischem Material sind.

5. Aerosolabscheider nach Anspruch 4, **dadurch gekennzeichnet, dass** die Stellfläche, von der Anströmung her gesehen, pyramiden- oder kegelförmig ist,
der Öffnungswinkel α auf jeden Fall < 180° ist und
vorzugsweise im Bereich 70° < α < 100° liegt.

6. Aerosolabscheider nach Anspruch 5, **dadurch gekennzeichnet, dass** die Stellfläche ein perforiertes Blech ist, dessen Perforationen, falls sie länglich sind, mit ihrer Längsachse in Richtung des Gradienten oder der lokal durchgehenden Mantellinie der Stellfläche gehen.

7. Aerosolabscheider nach Anspruch 5, **dadurch gekennzeichnet, dass** die Stellfläche ein Gitter mit regelmäßigen Maschen ist, wobei beim eingebauten Gitter Maschendrähte nicht waagerecht verlaufen.

8. Aerosolabscheider nach Anspruch 5, **dadurch gekennzeichnet, dass** die Stellfläche ein Gitter aus mit zur Spitze hin gerichteten geraden Drahtstücken ist, welche auf der stromabgewandten Seite durch einen mit Steigung umlaufenden, festangebrachten Draht oder mit Steigung teilweise umlaufenden, festangebrachten Drähten in Form gehalten werden, wobei die Steigung dieses umlaufenden Drahtes oder dieser umlaufenden Drahtstücke im Durchströmungsbereich des Nassgases nie einen Bereich mit waagerechtem Verlauf haben.

9. Aerosolabscheider nach den Ansprüchen 6 bis 8, **dadurch gekennzeichnet, dass** oberhalb des Rohrpakets eine weitere Sprühebene eingebaut ist, die aus einem von der Kanalwand senkrecht ausgehenden Rohr besteht,
das in eine flussdeltaförmige Rohrverzweigung aus mindestens einem Zweig
oder in einen zur Kanalachse konzentrischen Rohrring mündet, die oder der mit Sprühdüsen zur gleichmäßigen Besprühung der in Strömungsrichtung weisenden konvexen Stirn des Rohrpakets bestückt sind.

10. Aerosolabscheider nach Anspruch 9, **dadurch gekennzeichnet, dass** die Abflussöffnungen der Rinne an der tiefsten Stelle ihres jeweiligen Einzugsbereichs sitzen.

11. Aerosolabscheider nach einem der vorangehenden Ansprüche, **dadurch gekennzeichnet, dass** das Rohrpaket bei großer baulicher Ausdehnung aus Rohrpaketsegmenten besteht.

12. Verwendung von Rohren zur Bildung eines Rohrpakets für einen Aerosolabscheider nach einem der Ansprüche 1 bis 11,
**dadurch gekennzeichnet,**
**dass** ein Einzelrohr des Rohrpakets so bemessen ist, dass die Reynoldszahl Re = w * D/ν < 2000 bleibt,
wobei w die Gasgeschwindigkeit in m/s, ν die Gasviskosität im Betriebszustand in m²/s und D der Durchmesser des Einzelrohres sind.

## Claims

1. Aerosol separator for removing dust and droplet aerosols, comprising;
- a channel portion which stands with its channel axis vertical or inclined and in which the aerosol separator is accommodated and can be subjected to a flow of waste gas from below,
- an injection nozzle zone which covers the channel cross-section or a plurality of such injection nozzle zones which are stacked axially one behind the other and have respectively one nozzle in the channel wall
or respectively having a plurality of nozzles which are uniformly distributed around the circumference and are situated in one cross-sectional plane,
in which the throughflowing untreated or exhaust gas can be impinged upon by a mist of droplets comprising a readily evaporating liquid and can pass into the supersaturated wet region,
the respective spray axis of a nozzle being directed perpendicularly to the axis up to diagonally thereto counter to the exhaust gas flow,
- a bundle of tightly packed and straight tubes of the same type which are connected in the flow direction and extend across the channel cross-section, said tubes being made of a process-suitable/-inert material and standing, as a tube bundle, all on one gas-permeable surface which is disposed transversely relative to the flow direction and which can be configured in particular as a perforated outlet plate and, starting from the channel axis, always has a gradient to the channel wall, in order to divert condensate which is separated in the tube bundle during operation, and is anchored on the channel wall, the length of a tube is at least five times the tube diameter D,
- a groove which extends around the circumference completely at the inner wall of the channel between the last injection nozzle zone and close to the base line of the gas-permeable surface, in order to collect the discharging condensate adhering to the gas-permeable surface during operation, with at least one discharge opening through the channel wall.

2. Aerosol separator according to claim 1, **characterised in that** the tubes of the tube bundle are smooth.

3. Aerosol separator according to claim 1, **characterised in that** the tubes of the tube bundle are corrugated or are wound in a spiral.

4. Aerosol separator according to claims 2 and 3, **characterised in that** the tubes are made of dielectric or metallic material.

5. Aerosol separator according to claim 4, **characterised in that** the surface, viewed from the inflow, has a pyramidal or conical shape, the opening angle α is at any rate < 180° and preferably in the range 70° < α < 100°.

6. Aerosol separator according to claim 5, **characterised in that** the surface is a perforated metal sheet, the perforations of which, if they are elongated, extend with their longitudinal axis in the direction of the gradient or of the generating line which locally passes through the surface.

7. Aerosol separator according to claim 5, **characterised in that** the surface is a grid with regular meshes, mesh wires not extending horizontally when the grid is installed.

8. Aerosol separator according to claim 5, **characterised in that** the surface is a grid comprising straight wire pieces which are directed towards the tip, said wire pieces being retained in shape on the downstream side by a firmly attached wire which extends circumferentially at a gradient or by firmly fixed wires which extend partially circumferentially at a gradient, the gradient of this circumferential wire or these circumferential wire pieces never having a region with a horizontal course in the throughflow region of the wet gas.

9. Aerosol separator according to claims 6 to 8, **characterised in that** a further spray plane is incorporated above the tube bundle and comprises a tube which extends perpendicularly from the channel wall
and discharges into a river delta-shaped tube branch comprising at least one branch
or into a tube ring which is concentric to the channel axis, which are fitted with spray nozzles for uniform spraying of the convex end of the tube bundle which points in the flow direction.

10. Aerosol separator according to claim 9, **characterised in that** the discharge openings of the groove are situated at the lowest point of their respective intake region,

11. Aerosol separator according to one of the preceding claims, **characterised in that**, in the case of a large constructional extension, the tube bundle comprises tube bundle segments,

12. Use of tubes to form a tube bundle for an aerosol separator according to one of the claims 1 to 11,
**characterised in that**
an individual tube of the tube bundle is dimensioned such that the Reynolds number remains Re = w * D /ν < 2000,
w being the gas speed in m/s, ν the gas viscosity in the operating state in m²/s and D the diameter of the individual tube.

## Revendications

1. Séparateur d'aérosols pour séparer des aérosols de poussières et de gouttes, comprenant :
- une partie de canal dont l'axe de canal s'étend de façon perpendiculaire ou inclinée, dans laquelle est logé le séparateur d'aérosols, et dans laquelle des gaz d'échappement peuvent pénétrer par le bas,
- une zone d'injection recouvrant la section transversale du canal, ou plusieurs telles zones d'injection axialement empilées les unes derrière les autres, comprenant chacune une buse dans la paroi de canal, ou comprenant chacune plusieurs buses équidistantes sur la périphérie dans un plan de section transversale, dans laquelle ou lesquelles le gaz brut ou d'échappement s'écoulant peut être chargé par un brouillard de gouttes d'un liquide s'évaporant facilement et peut être transféré à l'état humide sursaturé, l'axe d'atomisation respectif d'une buse étant orienté perpendiculairement à l'axe ou de façon inclinée par rapport à celui-ci, à l'opposé du courant de gaz d'échappement,
- un faisceau raccordé dans la direction d'écoulement s'étendant sur la section transversale du canal, comprenant des tubes droits très rapprochés et identiques en matériau approprié pour le processus/inerte, qui en forme de paquet de tubes sont tous placés sur une surface de pose perméable aux gaz disposée transversalement à la direction d'écoulement, qui peut en particulier être une tôle perforée et présente toujours une pente vers la paroi de canal à partir de l'axe de canal pour évacuer du condensat séparé dans le faisceau de tubes pendant le fonctionnement et qui est ancrée sur la paroi de canal, la longueur d'un tube présentant au moins cinq fois le diamètre de tube D, et
- une goulotte s'étendant entièrement sur la paroi intérieure du canal entre la dernière zone d'injection et près de la ligne de base de la surface de pose perméable aux gaz pour récupérer le condensat qui pendant le fonctionnement adhère à la surface de pose perméable aux gaz, avec au moins une ouverture d'évacuation à travers la paroi de canal.

2. Séparateur d'aérosols selon la revendication 1,
**caractérisé en ce que**
les tubes du paquet de tubes sont lisses.

3. Séparateur d'aérosols selon la revendication 1,
**caractérisé en ce que**
les tubes du paquet de tubes sont ondulés ou hélicoïdaux.

4. Séparateur d'aérosols selon les revendications 2 et 3,
**caractérisé en ce que**
les tubes sont en matériau diélectrique ou métallique.

5. Séparateur d'aérosols selon la revendication 4,
**caractérisé en ce que**
la surface de pose, vue du côté afflux, est pyramidale ou conique, l'angle d'ouverture α est en tous les cas < 180° et se situe de préférence entre 70° < α < 100°.

6. Séparateur d'aérosols selon la revendication 5,
**caractérisé en ce que**
la surface de pose est une tôle perforée dont les perforations, si elles sont allongées, passent par leur axe longitudinal en direction du gradient ou de la génératrice localement traversante de la surface de pose.

7. Séparateur d'aérosols selon la revendication 5,
**caractérisé en ce que**
la surface de pose est une grille avec des mailles régulières, dont des fils de maille ne s'étendent pas horizontalement lorsque la grille est montée.

8. Séparateur d'aérosols selon la revendication 5,
**caractérisé en ce que**
la surface de pose est une grille avec des pièces de fil orientées tout droit en direction de la pointe, dont la forme est maintenue du côté détourné du courant par un fil fixe circulaire en pente ou par des fils fixes partiellement circulaires en pente, la pente de ce fil circulaire ou de ces pièces de fil circulaires ne présentant jamais une zone s'étendant horizontalement dans la zone d'écoulement du gaz humide.

9. Séparateur d'aérosols selon les revendications 6 à 8,
**caractérisé en ce qu'**
au-dessus du paquet de tubes un autre plan d'injection est installé et comprend un tube perpendiculaire par rapport à la paroi de canal, qui débouche dans un branchement de tubes en forme de delta comprenant au moins une branche ou dans un anneau de tube concentrique à l'axe de canal, et muni de buses d'injection pour l'aspersion homogène du front convexe du paquet de tubes orienté dans la direction d'écoulement.

10. Séparateur d'aérosols selon la revendication 9,
**caractérisé en ce que**
les ouvertures d'évacuation de la goulotte se situent au point le plus bas de leur zone d'alimentation respective.

11. Séparateur d'aérosols selon l'une quelconque des revendications précédentes,
**caractérisé en ce que**
dans une installation d'une grande dimension, le paquet de tubes comprend plusieurs segments de paquet de tubes.

12. Utilisation de tubes pour former un paquet de tubes pour un séparateur d'aérosols selon l'une quelconque des revendications 1 à 11,
**caractérisée en ce qu'**
un tube individuel du paquet de tubes est dimensionné pour que le nombre de Reynolds reste à Re = w * D/v < 2 000, w étant la vitesse du gaz en m/ s, v la viscosité du gaz à l'état de fonctionnement en m²/s et D le diamètre du tube individuel.
